(19) Europäisches Patentamt

European Patent Office

Office européen des brevets

(11) **EP 1 531 291 A2**

(12) **EUROPEAN PATENT APPLICATION**

(43) Date of publication:
**18.05.2005 Bulletin 2005/20**

(51) Int Cl.$^7$: **F16H 61/00**

(21) Application number: **04026223.0**

(22) Date of filing: **04.11.2004**

| | |
|---|---|
| (84) Designated Contracting States:<br>**AT BE BG CH CY CZ DE DK EE ES FI FR GB GR HU IE IS IT LI LU MC NL PL PT RO SE SI SK TR**<br>Designated Extension States:<br>**AL HR LT LV MK YU** | (72) Inventor: **Katou, Yoshiaki**<br>**Fuji-shi Shizuoka 417-8585 (JP)** |
| (30) Priority: **14.11.2003 JP 2003385494** | (74) Representative: **Grünecker, Kinkeldey, Stockmair & Schwanhäusser Anwaltssozietät Maximilianstrasse 58 80538 München (DE)** |
| (71) Applicant: **JATCO Ltd**<br>**Fuji-shi, Shizuoka 417-8585 (JP)** | |

(54) **Belt-type continuously variable transmission**

(57) A belt-type continuously variable transmission (3) comprises a drive pulley (10) including cylinder (20) and cramp chambers (30) which vary an effective radius of the drive pulley (10) when applied with a hydraulic pressure, a driven pulley (40) including cylinder (60) and cramp chambers (50) which vary an effective radius of the driven pulley (40) when applied with a hydraulic pressure, a belt operatively put around the drive (10) and driven pulleys (40) and a hydraulic circuit that applies the cylinder (80,60) and cramp chambers (30,50) of the drive (10) and driven pulleys (40) with the hydraulic pressure to vary the effective radii of the drive (10) and driven pulleys (40). The hydraulic circuit includes a line pressure passage that has a line pressure regulating valve (110) installed therein for producing a line pressure in the line pressure passage. The cramp chambers of the drive (10) and driven pulleys (40) are substantially the same in a pressure receiving area and are connected to the line pressure passage to be fed with the line pressure.

FIG.3

EP 1 531 291 A2

**Description**

BACKGROUND OF THE INVENTION

1. Field of the Invention

The present invention relates in general to belt-type continuously variable transmissions in which a metal belt is put around a drive pulley (or primary pulley) and a driven pulley (or secondary pulley), each pulley having a width-variable V-groove therearound for operatively receiving therein the metal belt. More specifically, the present invention is concerned with improvement in a hydraulic system that controls the groove width of the drive and driven pulleys.

2. Description of the Related Art

In order to clarify the task of the present invention, the belt-type continuously variable transmission disclosed in Japanese Laid-open Patent Application (Tokkai) 2000-27959 will be briefly explained before describing the detail of the present invention.

In this transmission of the related art, a hydraulic system is employed in which a torque cam mechanism is arranged in a torque input side, so that a line pressure in an oil passage is varied in accordance with a magnitude of an input torque. The oil passage is connected to piston chambers of the drive and driven pulleys. For suppressing a slippage of the metal belt relative to the drive and driven pulleys, the pressure receiving area of each piston chamber is changeable to two groups in accordance with a drive ratio (or pulley ratio) between the drive and driven pulley.

SUMMARY OF THE INVENTION

However, due to the inherent construction of the hydraulic system, the transmission of the above-mentioned transmission fails to exhibit a satisfied performance. That is, because of need of high line pressure, an associated oil pump is subjected to a high load, which tends to waste the engine power. Furthermore, since the pressure receiving area of the piston chamber is larger than that of a speed change piston chamber, a differential thrust (viz., a difference between a thrust with which the metal belt is pressed against the drive pulley and a thrust with which the metal belt is pressed against the driven pulley) needed by the transmission at a speed change fails to have a satisfied value and thus the speed change is not quickly or smoothly carried out.

Accordingly, an object of the present invention is to provide a belt-type continuously variable transmission which is free of the above-mentioned drawbacks.

In accordance with the present invention, there is provided a belt-type continuously variable transmission which can reduce a load applied to the oil pump and can carry out a quick speed change.

In accordance with the present invention, cramp chambers of respective hydraulic actuators of drive and driven pulleys are substantially the same in a pressure receiving area and these cramp chambers are connected to a line pressure passage of a hydraulic circuit to be fed with a line pressure that is the highest in hydraulic pressures appearing in the hydraulic circuit.

In accordance with a first aspect of the present invention, there is provided a belt-type continuously variable transmission which comprises a drive pulley having a first double piston type hydraulic actuator which includes cylinder and cramp chambers that vary an effective radius of the drive pulley when applied with a hydraulic pressure; a driven pulley having a second double piston type hydraulic actuator which includes cylinder and cramp chambers which vary an effective radius of the driven pulley when applied with a hydraulic pressure; a belt operatively put around the drive and driven pulleys; and a hydraulic circuit that applies the cylinder and cramp chambers of the first and second double piston type hydraulic actuators with the hydraulic pressure to vary the effective radii of the drive and driven pulleys, the hydraulic circuit including a line pressure passage that has a line pressure regulating valve installed therein for producing a line pressure in the line pressure passage, wherein the cramp chambers of the first and second double piston type hydraulic actuators are substantially the same in a pressure receiving area and are connected to the line pressure passage to be fed with the line pressure regulated by the line pressure regulating valve.

In accordance with a second aspect of the present invention, there is provided a belt-type continuously variable transmission which comprises a drive pulley having a first double piston type hydraulic actuator which includes cylinder and cramp chambers that vary an effective radius of the drive pulley when applied with a hydraulic pressure; a driven pulley having a second double piston type hydraulic actuator which includes cylinder and cramp chambers that vary an effective radius of the driven pulley when applied with a hydraulic pressure, the second double piston type hydraulic actuator further including a centrifugal chamber that works against the cramp and cylinder chambers of the second double piston type hydraulic actuator; a belt operatively put around the drive and driven pulleys; and a hydraulic circuit that applies the cylinder and cramp chambers of the first and second double piston type hydraulic actuators with the hydraulic pressure to vary the effective radii of the drive and driven pulleys, the hydraulic circuit including a line pressure passage that has a line pressure regulating valve installed herein for producing a line pressure in the line pressure passage, the line pressure being the highest in hydraulic pressures appearing in the hydraulic circuit, wherein the cramp chamber of the first and second double piston type hydraulic actuators are substantially the same in a pressure receiving area and are connected to the line pressure passage to be fed with the line pressure regulated by the line pressure regulating valve, and wherein the cylinder chambers of the first and second double piston type hydraulic actuators are substantially the same in a pressure receiving area.

BRIEF DESCRIPTION OF THE DRAWINGS

Other objects and advantages of the present invention will become apparent from the following description when taken in conjunction with the accompanying drawings, in which:

Fig. 1 is a diagram showing the overall construction of a belt-type continuously variable transmission according to the present invention;
Fig. 2 is a sectional view of the belt-type continuously variable transmission according to the present invention;
Fig. 3 is a diagram showing a hydraulic circuit employed in the belt-type continuously variable transmission of the present invention;
Fig. 4 is a flowchart showing programmed operation steps executed by a control unit for controlling a speed change of the belt-type continuously variable transmission of the present invention;
Fig. 5 is a time chart showing changes of hydraulic pressure of various portions that appear when an up-shift operation takes place; and
Fig. 6 is a time chart showing changes of hydraulic pressure of the various portions that appear when a down-shift operation takes place.

DETAILED DESCRIPTION OF THE INVENTION

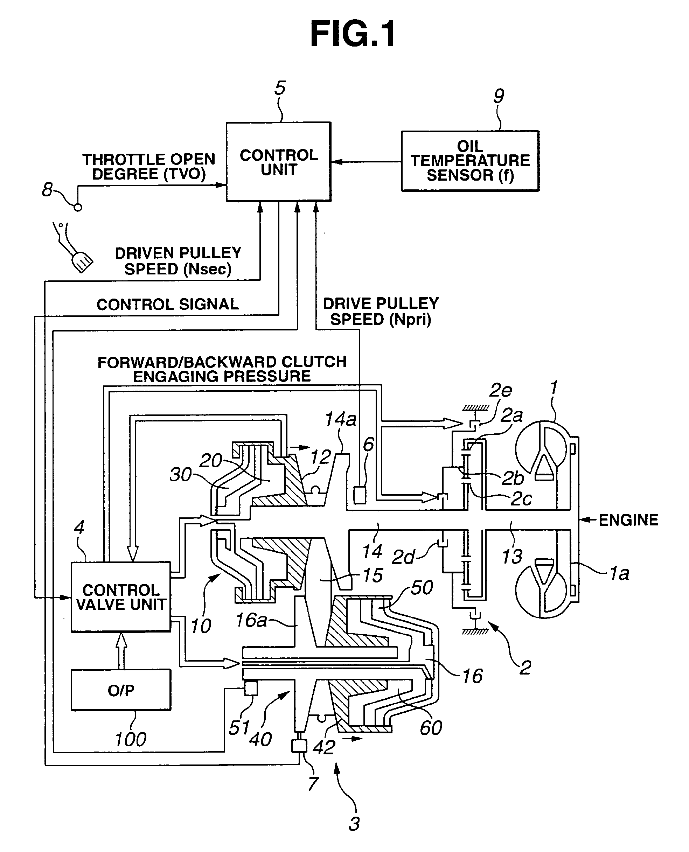

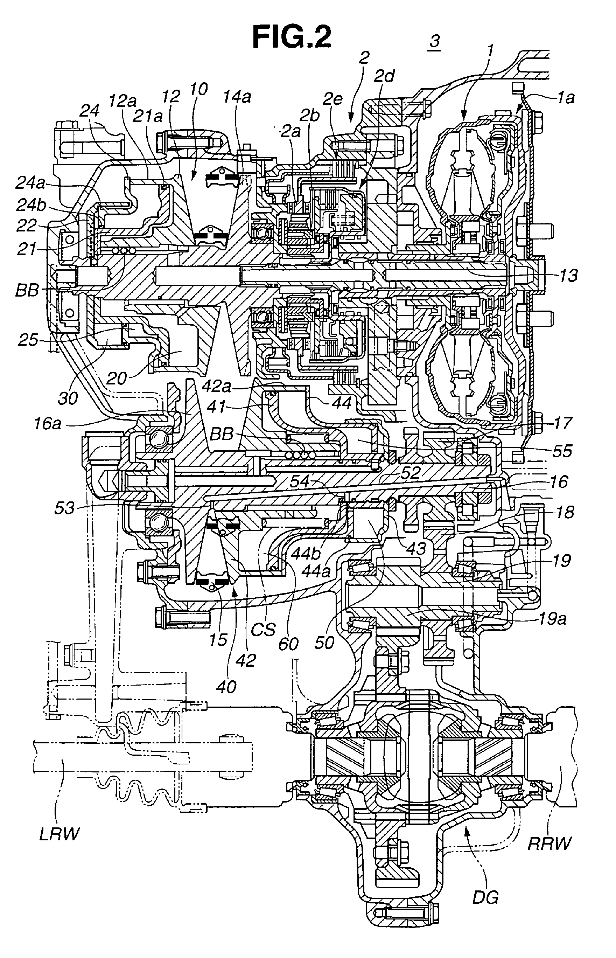

In the following, the present invention will be described in detail with reference to the accompanying drawings.
For ease of understanding, various directional terms, such as, right, left, upper, lower, rightward and the like are used in the following description. However, such terms are to be understood with respect to a drawing or drawings on which the corresponding part or portion is shown.
Referring to Figs. 1 and 2, there is shown a belt-type continuously variable transmission 3 of the present invention incorporated. Fig. 1 is a drawing showing a hydraulic control system of the transmission and Fig. 2 is a sectional view of the transmission. However, Fig. 2 shows two conditions assumed by drive and driven pulleys 10 and 40 which will be described in detail hereinafter.
As is understood from these drawings, the transmission 3 has a torque converter 1 connected thereto. Although not shown in the drawing, an output shaft of an engine (viz., internal combustion engine) is connected to an input member (or impeller) of the torque converter 1. The torque converter 1 shown is of a type that has a lock-up clutch 1a through which the engine output shaft and an input shaft of the transmission 3 can be directly connected.
An output shaft 13 (or turbine) of the torque converter 1 is connected to a ring gear 2a of a forward/backward switch mechanism 2.
The forward/backward switch mechanism 2 is a planetary gear unit that comprises the ring gear 2a connected to the torque converter output shaft 13, pinions (not shown), a pinion carrier 2b carrying the pinions, and a sun gear 2c connected to an input shaft 14 of the transmission 3. As is known, each pinion is meshed with both the ring gear 2a and the sun gear 2c.
To the pinion carrier 2b, there are connected a reverse brake 2e through which the pinion carrier 2b can be fixed to a transmission case and a forward clutch 2d through which the transmission input shaft 14 and the pinion carrier 2b can be connected.
The transmission 3 generally comprises a drive pulley 10, a driven pulley 40 and a metal belt 15 that is put around the drive and driven pulleys 10 and 40 to transmit the turning force (or torque) of the drive pulley 10 to the driven pulley 40.
As is well shown in Fig. 1, at a left end of the transmission input shaft 14, there is arranged the drive pulley 10.
The drive pulley 10 comprises a fixed pulley half 14a rotating together with the transmission input shaft 14 and a movable pulley half 12 that is axially movably disposed on the shaft 14 and coaxially faces the fixed pulley half 14a thereby to define therebetween a V-groove. For smoothing the axial movement of the movable pulley half 12 on the shaft 14, there is disposed a ball bearing "BB" therebetween. The axial position of the movable pulley half 12, that is, the width of the V-groove of the drive pulley 10 is controlled or adjusted by a hydraulic pressure that is applied to a first double piston type hydraulic actuator.

The first double piston type hydraulic actuator comprises a drive pulley cylinder chamber 20 and a drive pulley cramp chamber 30. Between these two chambers 20 and 30, there is defined a centrifugal chamber 25 which functions to cancel unnecessary actions of the cylinder and cramp chambers 20 and 30.

The driven pulley 40 is disposed on a follower shaft 16. The driven pulley 40 comprises a fixed pulley half 16a rotating together with the follower shaft 16 and a movable pulley half 42 that is axially movably disposed on the follower shaft 16 and coaxially faces the fixed pulley half 16a thereby to define therebetween a V-groove. For smoothing the axial movement of the movable pulley half 42 on the follow shaft 16, there is disposed a ball bearing "BB" therebetween. The axial position of the movable pulley shaft 42, that is, the width of the V-groove of the driven pulley 40 is controlled or adjusted by a hydraulic pressure that is applied to a second double piston type hydraulic actuator.

The second double piston type hydraulic actuator comprises a driven pulley cylinder chamber 60 and a driven pulley cramp chamber 50.

Now, a piston chamber structure of each of the drive and driven pulleys 10 and 40 will be described in detail with reference to Fig. 2.

As is seen from Fig. 2, the drive pulley cylinder chamber 20 is enclosed by the movable pulley half 12, an extension part 12a of the movable pulley half 12 and a fixed wall 21. An inner surface of the extension part 12a and an outer surface of the fixed wall 21 are hermetically sealed by a seal member 21a. Thus, the axial movement of the movable pulley half 12 is carried out while keeping a fluid-tight condition of the drive pulley cylinder chamber 20.

The drive pulley cramp chamber 30 is enclosed by the fixed wall 21, another fixed wall 22 and a piston 24. A peripheral edge of the piston 24 is connected with the extension part 12a of the movable pulley half 12. By using seal members 24a and 24b, the drive pulley cramp chamber 30 maintains a fluid-tight condition thereof.

The driven pulley cramp chamber 50 is enclosed by two fixed walls 41 and 43 and a piston 44. Between the fixed wall 41 and the movable pulley haft 42, there is compressed a coil spring "CS". A peripheral edge of the piston 44 is connected with an extension part 42a of the movable pulley half 42. Due to usage of seal members 44a and 44b connected to the piston 44, the driven pulley cramp chamber 50 keeps a fluid-tight condition thereof.

Between the driven pulley cylinder chamber 60 and the driven pulley cramp chamber 50, there is defined a centrifugal chamber 55. The follower shaft 16 has therein an axially extending oil passage 52 through which a hydraulic pressure is applied to the centrifugal chamber 55 through a branch passage 54.

The oil passage 52 has at a position remote from the centrifugal chamber 55 an opening 53 through which the oil passage 52 is exposed to the V-groove of the driven pulley 40.

Due to provision of the branch passage 54 through which the hydraulic pressure is applied to the centrifugal chamber 55, an effective radius of the centrifugal hydraulic pressure (viz., an effective radius of the centrifugal chamber 55) is increased by a degree corresponding to the length of the branch passage 54. This means an increase of the thrust produced by the centrifugal chamber 55. It is to be noted that the effective radius is a radial distance between a point where the centrifugal chamber 55 is exposed to the atmospheric area and an outermost diameter of the centrifugal chamber 55.

Due to arrangement of the fixed wall 41, the hydraulic pressure in the driven pulley cylinder chamber 60 functions in a manner to reduce the width of the V-groove of the driven pulley 40, and due to arrangement of the fixed wall 43, the hydraulic pressure in the driven pulley cramp chamber 50 functions in a manner to reduce the width of the V-groove of the driven pulley 40 also. While, due to arrangement of the fixed wall 41, the hydraulic pressure in the centrifugal chamber 55 functions in a manner to increase the width of the V-groove of the driven pulley 40. Thus, the centrifugal chamber 55 operates against both the driven pulley cylinder chamber 60 and the driven pulley cramp chamber 50. That is, the centrifugal chamber 55 functions to cancel the centrifugal hydraulic pressure in the chambers 60 and 50. The oil led to the atmosphere from the opening 53 is used as a lubrication oil for the metal belt 15, and thus, the atmospheric pressure is effectively used.

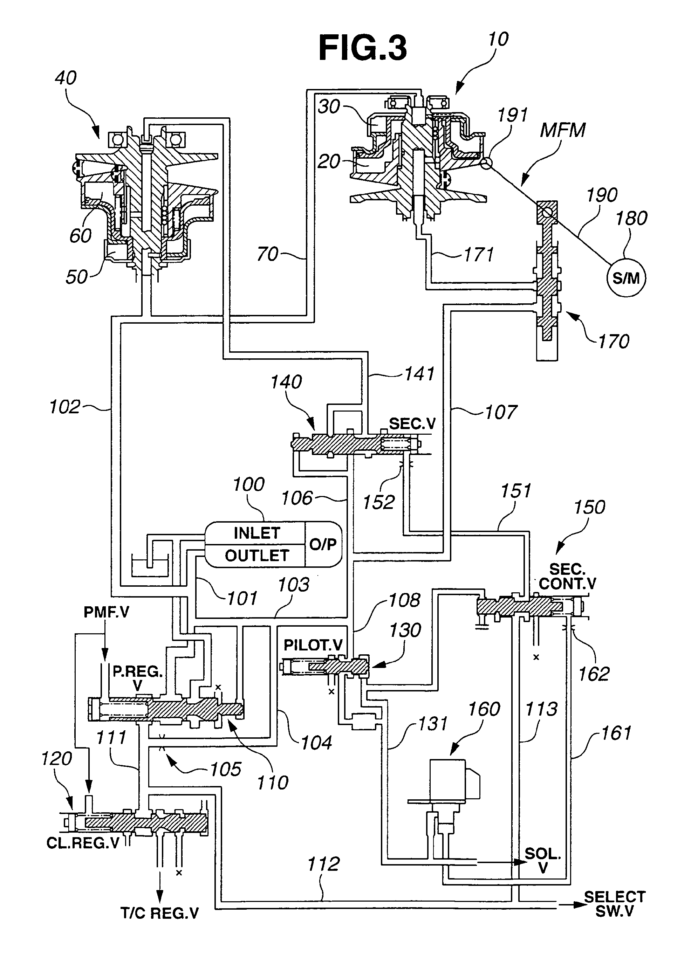

It is to be noted that the drive pulley cramp chamber 30 and the driven pulley cramp chamber 50 are substantially the same in a pressure receiving area. That is, the cross sectional area (or effective pressure receiving area) of each of the chambers 30 and 50 is set to a given value "Acl". As will be described hereinafter with the aid of Fig. 3, these two chambers 30 and 50 are connected to an oil passage 70. It is also to be noted that the drive pulley cylinder chamber 20 and the driven pulley cylinder chamber 60 are substantially the same in a pressure receiving area. That is, the cross sectional area (or effective pressure receiving area) of each of the chambers 20 and 60 is set to a given value "Asft".

Referring back to Fig. 2, the follower shaft 16 has a drive gear 17 connected thereto. The drive gear 17 is meshed with a pinion 18 mounted on an idler shaft 19 that has a final gear 19a integrally connected thereto. The final gear 19a is meshed with a differential gear DG, so that the torque of the follower shaft 16 is transmitted to right and left road wheels "RRW" and "LRW" through the drive gear 17, the pinion 18, the idler shaft 19, the final gear 19a and the differential gear DG.

Thus, as will be understood from Fig. 1, by axially moving both the movable pulley half 12 of the drive pulley 10 and the movable pulley half 42 of the driven pulley 40 in the above-mentioned manner, the width of the V-groove of each of the drive and driven pulleys 10 and 40 can be varied or adjusted in accordance with a drive ratio necessitated by the associated motor vehicle.

As is'seen from Fig. 1, for controlling the drive ratio, that is, for controlling the widths of the V-grooves of the drive and driven pulleys 10 and 40, a transmission control unit 5 is employed. That is, as will be described in detail in the following, the transmission control unit 5 controls the hydraulic pressure in the four chambers 20, 60, 30 and 50 in accordance with an operation condition of the vehicle.

That is, to the transmission control unit 5, there are fed various information signals, which are a throttle open degree representing signal "TVO" from a throttle valve open degree sensor 8, a transmission oil temperature representing signal "f" from an oil temperature sensor 9 in the transmission, a drive pulley speed representing signal "Npri" from a drive pulley rotation speed sensor 6 and a driven pulley speed representing signal "Nsec" from a driven pulley rotation speed sensor 7. By processing these signals "TVO", "f", "Npri" and "Nsec", the transmission control unit 5 issues a control signal to a control valve unit 4 that is connected to an oil pump 100 powered by the engine.

As shown, to the control valve unit 4, there is fed the control signal from the transmission control unit 5. Based on this control signal, solenoids in the control valve unit 4 are operated for carrying out feeding of a controlled hydraulic pressure to each of the chambers 20, 60, 30 and 50.

In the following, a hydraulic circuit defined by the control valve unit 4 incorporated with the transmission of the present invention will be described in detail with reference to Fig. 3.

As shown, to an outlet port of the oil pump 100, there is connected through an oil passage 101 a line pressure regulating valve "P.REG.V" 110 that regulates a line pressure. To the line pressure regulating valve 110, there is fed also a hydraulic pressure from a pressure modification valve "PMF.V" (not shown). The hydraulic pressure appearing between the oil pump 100 and the line pressure regulating valve 110 is led to oil passages 102 and 103 that are connected to the oil passage 101.

The oil passage 102 leads to an oil passage 70 that is connected to both the drive pulley cramp chamber 30 and the driven pulley cramp chamber 50, as shown. That is, the line pressure regulated by the line pressure regulating valve 110 is constantly applied to the two cramp chambers 30 and 50 through the oil passages 102 and 70.

To the oil passage 103, there are connected four oil passages 104, 106, 107 and 108. The oil passage 104 is connected through an orifice 105 to an oil passage 111 which will be described hereinafter. The oil passage 106 is connected to a secondary valve "SEC.V" 140 that controls the hydraulic pressure in the driven pulley cylinder chamber 60 through an oil passage 141. The oil passage 107 is connected to a speed change control valve 170 that controls the hydraulic pressure in the drive pulley cylinder chamber 20 through an oil passage 171. The oil passage 108 is connected to a pilot valve "PILOT.V" 130 that adjusts a pilot pressure that serves as a base for producing the signal pressure.

The oil passage 111 has an upstream end connected to the line pressure regulating valve 110 and a downstream end connected to a clutch regulating valve "CL.REGV" 120 that regulates a second hydraulic pressure (for example, a pressure for engaging the forward clutch 2d (see Fig. 1)) that is lower than the line pressure. A hydraulic pressure regulated by the clutch regulating valve 120 is led to a torque converter regulating valve "T/C REG.V" (not shown).

As has been mentioned hereinabove, to the oil passage 111, there is connected the oil passage 104 through the orifice 105. The hydraulic pressure appearing in the oil passage 111 is led through an oil passage 112 to a select switching valve "SELECT.SW.V" (not shown) and to a secondary control valve "SEC.CONT.V" 150 through an oil passage 113.

The pilot pressure regulated by the pilot valve 130 is led through an oil passage 131 to a secondary pressure solenoid valve 160 to produce the signal pressure. The oil passage 131 is led to other solenoid valves (not shown). The signal pressure regulated by the secondary pressure solenoid 160 is led through an oil passage 161 and an orifice 162 to the secondary control valve 150 as a back pressure of the same. A third hydraulic pressure regulated by the secondary control valve 150 (that is, hydraulic pressure produced by regulating the second hydraulic pressure) is fed through an oil passage 151 and an orifice 152 to the secondary valve 140 as a back pressure of the same. A secondary speed change pressure regulated by the secondary valve 140 (viz., hydraulic pressure produced by regulating the line pressure) is led to the driven pulley cylinder chamber 60 through the oil passage 141.

As shown, to the speed change control valve 170, there is operatively connected a mechanical feedback mechanism MFM that adjusts operation of the speed change control valve 170 in accordance with operation of the drive pulley 10. The mechanical feedback mechanism MFM comprises a step motor 180, a link 190 and a groove-width indicating mechanism 191 incorporated with the drive pulley 10. The link 190 is connected to a spool of the speed change control valve 170 and has one end connected to an output element of the step motor 180 and the other end connected to the groove-width indicating mechanism 191.

In the following, the operation of the mechanical feedback mechanism MFM will be described in detail with reference to Fig. 3.

When, upon operation of the step motor 180, the link 190 moves the speed change control valve 170 from a close position toward an open position, the hydraulic pressure in the driven pulley cylinder chamber 20 is varied changing the width of the V-groove of the drive pulley 10. With this, the drive ratio of the transmission is varied thereby to carry out the speed change of the vehicle. When the oil passage 171 is connected with a drain port of the valve 170, the width of the V-groove is increased and when the oil passage 171 is connected with the oil passage 107, the width of the V-groove is reduced. When the width of the V-groove is varied in the above-mentioned manner, a feedback information produced by the groove-width indicating mechanism 191 is fed back to operation of the valve 170 through the link 190 and the valve 170 is returned to the close position. That is, in the illustrated example, the drive ratio of the transmission is controlled by the step motor 180 (viz., a drive amount or the number of steps) of the step motor 180 with reference to the operation of the drive pulley 10.

When, in the speed change operation, the hydraulic pressure in the driven pulley cylinder chamber 60 is controlled to a relatively low level, a marked differential thrust is obtained. Thus, in this case, a quick speed change operation is expected. However, it is to be noted that the speed change control is adequately carried out by only keeping the pressure in the chamber 60 at a given level that obtains a sufficient belt cramping force.

In the following, the cylinder chambers 20 and 60 of the drive and driven pulleys 10 and 40 and the cramp chambers 30 and 50 of the same will be described with respect to an effective pressure receiving area.

As is described hereinabove, the cylinder chambers 20 and 60 are constructed to have the substantially same effective pressure receiving area "Asft", and also the cramp chambers 30 and 50 are constructed to have the substantially same effective pressure receiving area "Acl".

That is, assuming that a conventional single piston type belt-type continuously variable transmission has an effective pressure receiving area "A", the following inequality is satisfied by the transmission of the present invention:

$$A < Acl + Asft \hspace{4cm} (1)$$

In the illustrated embodiment of the invention, the following equations are also satisfied:

$$Acl + Asft \fallingdotseq 1.4 \times A \hspace{1cm} \text{.................} \hspace{1cm} (2)$$

$$Acl \fallingdotseq 0.4 \times A \hspace{1cm} \text{.................} \hspace{1cm} (3)$$

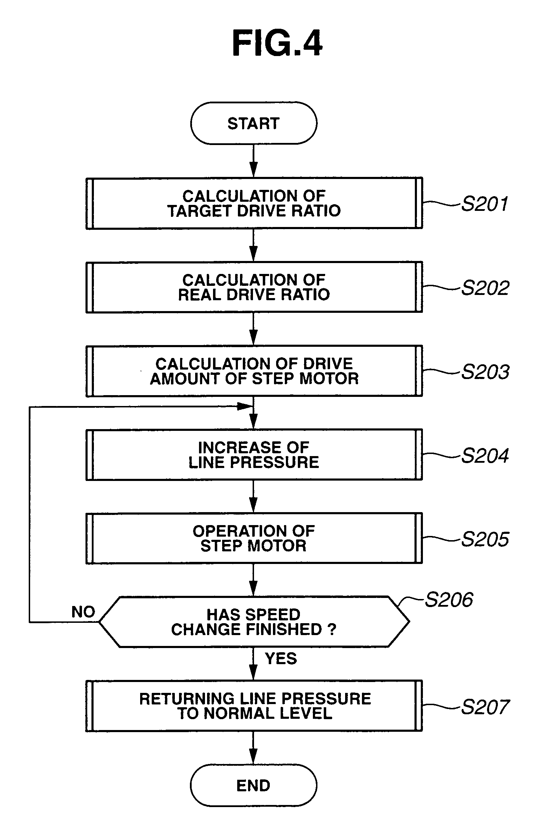

In the following, the speed change control of the transmission of the present invention will be described with reference to the flowchart of Fig. 4.

As is seen from the flowchart, at step S201, a target drive ratio "GR#" is calculated. Actually, the target drive ratio "GR#" is looked up from a map that shows a relationship between the ratio "GR#", a throttle valve open degree "TVO" and a vehicle speed "VSP".

At step S202, a real drive ratio "GR" is calculated based on the drive pulley speed "Npri" detected by the sensor 6 and the driven pulley speed "Nsec" detected by the sensor 7.

At step S203, the drive amount (or the number of steps) of the step motor 180 is calculated based on a difference between the target drive ratio "GR#" and the real drive ratio "GR".

At step S204, the line pressure is increased to such a level as to obtain a sufficient belt cramping force.

At step S205, based on the drive amount calculated at step S203, the step motor 180 is operated.

At step S206, judgment is carried out as to whether the speed change has been finished or not. If NO, that is, when the speed change has not finished yet, the operation flow goes back to step S204. While, if YES, that is, when the speed change has finished, the operation flow goes to step S207.

At step S207, the line pressure is returned to a normal level.

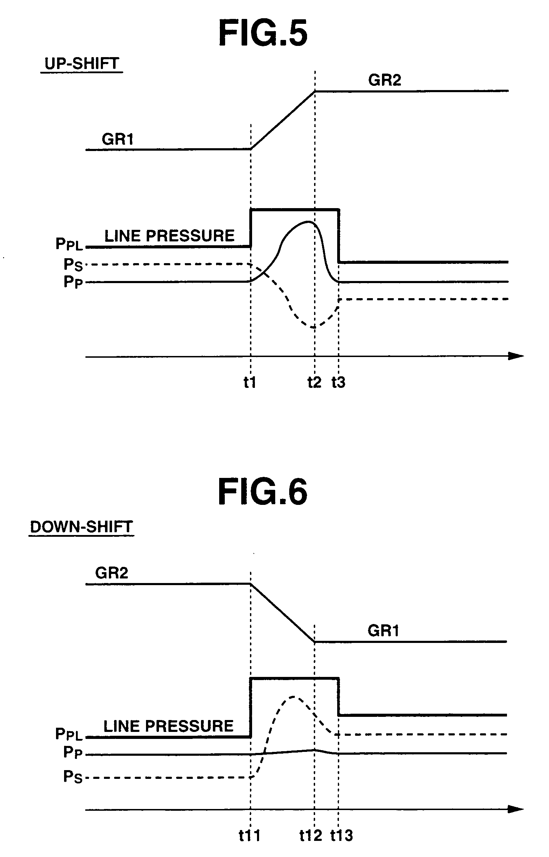

Referring to Fig. 5, there is shown a time chart showing changes of three hydraulic pressures that appear when an up-shift operation is carried out from a first drive ratio "GR1" to a second drive ratio "GR2". It is to be noted that the second drive ratio "GR2" is higher than the first drive ratio "GR1".

When an up-shift instruction is issued at time "t1", the second drive ratio "GR2" is set as the target drive ratio "GR#". Then, based on the difference (GR2 - GR1), the drive amount of the step motor 180 is calculated and the line pressure "$P_{PL}$" is instantly raised to a higher level. It is to be noted that the raised line pressure "$P_{PL}$" is higher than a hydraulic pressure "$P_p$" that is needed by the drive pulley cylinder chamber 20.

Since, as is mentioned hereinabove, the line pressure used for producing the belt cramping power is set to have a higher level, undesired slippage of the belt is suppressed or at least minimized.

The effective pressure receiving area "Acl" of the cramp chambers 30 and 50 is set to about 40% of the effective pressure receiving area "Astf" of the cylinder chambers 20 and 60. Accordingly, the value "Pp - Ps" on which the differential thrust depends at the speed change can be set to a larger level, that is, in other words, the value of "Ps" needed by the driven pulley cylinder chamber 60 can be set to a lower level. Thus, as compared with the conventional single piston type belt-type continuously variable transmission, a quick speed change can be effected in the present invention.

As is known, in effecting the up-shift operation, the width of the V-groove of the driven pulley 40 is increased for reducing an effective radius of the driven pulley 40.

It is to be noted that the effective radius is the distance between the axis of the pulley 40 (or 10) and an imaginary annular part of the V-groove of the pulley 40 (or 10) on and about which the metal belt 15 is actually or operatively put.

Due to reduction of the effective radius, the driven pulley 40 is forced to rotate much faster, which causes the centrifugal chamber 55 to produce a higher canceling pressure. The production of this higher canceling pressure serves to increase the width of the V-groove of the driven pulley 40 and thus the quick speed change is promoted.

Since, as is seen from Fig. 3, the drive pulley cramp chamber 30 and the driven pulley cramp chamber 50 are connected through the oil passage 70, a consumption flow of oil therebetween is almost zero even when the drive ratio is changed. Furthermore, since these chambers 30 and 50 are fed with the line pressure that is the highest in hydraulic pressures appearing in the hydraulic circuit, the pumping loss is quite small.

Referring back to the time chart of Fig. 5, when the real drive ratio "GR" is brought into agreement with the target drive ratio "GR$^{\#}$" at time "t2", the differential thrust is set to a value that can be maintained by the real drive ratio "GR2". In the illustrated embodiment, the drive ratio is controlled with the aid of the above-mentioned mechanical feedback mechanism MFM, and thus, a speed change stability and a reliability in failure are assured.

This advantage will be much apparent from the following description.

That is, if the cylinder chambers 20 and 60 are respectively formed with hydraulic control valves as a replacement of the mechanical feedback mechanism MFM, it becomes necessary to feed the hydraulic control valves with respective control signals to stabilize operation of the cylinder chambers 20 and 60, which however brings about a marked calculation load in the control unit 5. Furthermore, in failure, the hydraulic pressure in the cylinder chambers 20 and 60 can not be controlled and thus keeping the transmission at a desired drive ratio is impossible.

Referring back to the time chart of Fig. 5, when the differential thrust becomes to the set value at time "t3", the line pressure "$P_{PL}$" is immediately lowered to the normal level and the speed change operation is finished.

Referring to Fig. 6, there is shown a time chart that shows changes of the three hydraulic pressures that appear when a down-shift operation is carried out from the second drive ratio "GR2" to the first drive ratio "GR1".

When a down-shift instruction is issued at time "t11", the first drive ratio of "GR1" is set as the target drive ratio "GR$^{\#}$". Then, based on the difference (GR1 - GR2), the drive amount of the step motor 180 is calculated and the line pressure "$P_{PL}$" is instantly raised to a higher level. It is to be noted that the raised line pressure "$P_{PL}$" is higher than the hydraulic pressure "Ps" that is needed by the driven pulley cylinder chamber 60.

As is described hereinabove, in the transmission of the present invention, the sum (Acl + Asft) of the effective pressure receiving area "Acl" of each of the cramp chambers 30 and 50 and the effective pressure receiving area "Asft" of each of the cylinder chambers 20 and 60 is about 1.4 times as large as the effective pressure receiving area "A" of the conventional single piston type belt-type continuously variable transmission, and the effective pressure receiving area of each of the cramp chambers 30 and 50 is set to about 40% of that of the cylinder chambers 20 and 60. Accordingly, in the transmission of the present invention, a differential thrust needed for the speed change is obtainable with a lower hydraulic pressure "Ps" relative to the conventional single piston type transmission.

As is known, in effecting the down-shift operation, the width of the V-groove of the driven pulley 40 is reduced for increasing the effective radius of the driven pulley 40. Due to increase of the effective radius, the driven pulley 40 is forced to rotate much slower, which suppresses the centrifugal chamber 55 from producing a higher canceling pressure. Thus, the speed change operation is not obstructed by such canceling pressure.

Referring back to the time chart of Fig. 6, when the real drive ratio "GR" is brought into agreement with the target drive ratio "GR$^{\#}$" at time "t12", the differential thrust is set to a value that can be maintained by the real drive ratio "GR1". Due to the work of the mechanical feedback mechanism MFM employed in the invention, the speed change stability and the reliability in failure are assured.

When the differential thrust becomes to the set value at time "t13", the line pressure "$P_{PL}$" is immediately lowered to the normal level and the speed change operation is finished.

In the following, the various features of the present invention and advantages given by the features will be briefly described.

(1) The cramp chambers 30 and 50 of the drive and driven pulleys 10 and 40 have the substantially same pressure receiving area and are connected to each other through the oil passage 70 to receive the line pressure.

Accordingly, even when the drive ratio is changed, the consumption flow of oil between the cramp chambers 30 and 50 does not take place and thus, the pumping efficiency of the oil pump 100 can be increased. Furthermore, since these cramp chambers 30 and 50 are fed with the line pressure that is the highest in various hydraulic pressures appearing in the hydraulic circuit, undesired slippage of the metal belt 15 relative to the drive and driven pulleys 10 and 40 is assuredly suppressed and the oil pump 100 is effectively used.

(2) The pressure receiving area "Acl" of each of the cramp chambers 30 and 50 is set to a value that is smaller than approximately 1/2 of smaller one of the sum (Asft + Acl) of the pressure receiving area "Asft" of the drive pulley cylinder chamber 20 and the pressure receiving area "Acl" of the drive pulley cramp chamber 30 and the sum (Asft + Acl) of the pressure receiving area "Asft" of the driven pulley cylinder chamber 60 and the pressure receiving area "Acl" of the driven pulley cramp chamber 50.

That is, the pressure receiving area "Acl" of each cramp chamber 30 or 50 is approximately smaller than 1/2 of the sum (Asft + Acl). Accordingly, the differential thrust produced by each cylinder chamber 20 or 50 can be effectively used.

(3) The hydraulic pressure in the drive pulley cylinder chamber 20 is controlled by the speed change control valve 170 that has the mechanical feedback mechanism MFM incorporated therewith. Thus, the control of the drive ratio is easily carried out by the step motor 180, and thus the speed change stability and the reliability in failure are assured.

(4) In the speed change operation, the line pressure control by the line pressure regulating valve 110, the flow rate control by the speed change control valve 170 and the pressure reduction control by the secondary valve 140 are carried out cooperatively.

Thus, with the aid of the line pressure control, there is produced a line pressure that is somewhat higher than a needed hydraulic pressure. With this, the cramp chambers 30 and 50 of the drive and driven pulleys 10 and 40 can exhibit their satisfied performance for suppressing the undesired slippage of the metal belt relative to the drive and driven pulleys 10 and 40, and the cylinder chambers 20 and 60 of the pulleys 10 and 40 can exhibit their satisfied performance by using the higher line pressure effectively. Thus, the speed change operation is carried out with a higher response.

(5) Between the cylinder chamber 60 of the driven pulley 40 and the cramp chamber 50 of the same, there is provided the centrifugal chamber 55.

Upon up-shift operation, the rotation speed of the driven pulley 40 is increased and thus the canceling pressure produced by the centrifugal chamber 55 is increased. The production of such higher canceling pressure means to increase the width of the V-groove of the driven pulley 40 thereby promoting a quick speed change in the up-shift operation.

In the following, modifications of the present invention will be described.

Setting of the line pressure may be effected by using data maps.

The setting of the line pressure may be made by using a calculation based on a needed thrust. That is, for the calculation of the line pressure, the differential thrust "$\Delta Fz$" needed between the drive and driven pulleys 10 and 40 is calculated based on a difference between the target drive ratio "$GR^{\#}$" and the real drive ratio "GR", and then, based on the differential thrust "$\Delta Fz$" thus calculated, both a needed thrust "Fzp" of the drive pulley 10 and that of a needed thrust "Fzs" of the driven pulley 40 are calculated.

In case of an up-shift, the relation "Pp > Ps" is provided in view of a thrust needed in such up-shift operation, and thus setting is so made as to obtain "$P_{PL} > Pp$".

The needed thrusts "Fzp" and "Fzs" and the differential thrust "$\Delta Fz$" are represented from the following equations:

$$Fzp = P_{PL} \times Acl + Pp \times Asft \qquad (4)$$

$$Fzs = P_{PL} \times Acl + Ps \times Asft \qquad (5)$$

$$\Delta Fz = Fzp - Fzs = (Pp - Ps) \times Asft \qquad (6)$$

From these equations, the following equations are led:

$$Fzp = P_{PL} \times Acl + Pp \times Asft \qquad (7)$$

$$Fzs = P_{PL} \times Acl + Pp \times Asft - \Delta Fz \qquad (8)$$

From the equations (7) and (8), the values of "$P_{PL}$" and "Pp" can be obtained. Since the drive pulley cramp chamber 30 and the driven pulley cramp chamber 50 are substantially the same in the effective pressure receiving area (that is, "Acl"), setting the line pressure at such upper level has substantially no effect on the speed change operation. Thus, by adding a certain value to the calculated line pressure "PPL" with respect to a safety factor, the speed change operation can be carried out with a satisfied cramping force for cramping the metal belt 15.

In case of a down-shift, the "Ps > Pp" is provided, and thus, setting is so made as to obtain "$P_{PL}$ > Ps". Since the detail of this down-shift case is substantially the same as the above-mentioned up-shift case, explanation of it will be omitted.

The entire contents of Japanese Patent Application 2003-385494 (filed November 14, 2003) are incorporated herein by reference.

Although the invention has been described above with reference to the embodiment of the invention, the invention is not limited to such embodiment as described above. Various modifications and variations of such embodiment may be carried out by those skilled in the art, in light of the above description.

**Claims**

1. A belt-type continuously variable transmission comprising:

   a drive pulley having a first double piston type hydraulic actuator which includes cylinder and cramp chambers that vary an effective radius of the drive pulley when applied with a hydraulic pressure;
   a driven pulley having a second double piston type hydraulic actuator which includes cylinder and cramp chambers which vary an effective radius of the driven pulley when applied with a hydraulic pressure;
   a belt operatively put around the drive and driven pulleys; and
   a hydraulic circuit that applies the cylinder and cramp chambers of the first and second double piston type hydraulic actuators with the hydraulic pressure to vary the effective radii of the drive and driven pulleys, the hydraulic circuit including a line pressure passage that has a line pressure regulating valve installed therein for producing a line pressure in the line pressure passage,

   wherein the cramp chambers of the first and second double piston type hydraulic actuators are substantially the same in a pressure receiving area and are connected to the line pressure passage to be fed with the line pressure regulated by the line pressure regulating valve.

2. A belt-type continuously variable transmission as claimed in Claim 1, in which the cylinder chambers of the first and second double piston type hydraulic actuators are substantially the same in a pressure receiving area.

3. A belt-type continuously variable transmission as claimed in Claim 2, in which the pressure receiving area of each of the cramp chambers of the first and second double piston type hydraulic actuators is set to a value that is smaller than approximately 1/2 of the smaller one of the sum of the pressure receiving area of the cylinder chamber of the first double piston type hydraulic actuator and the pressure receiving area of the cramp chamber of the first double piston type hydraulic actuator and the sum of the pressure receiving area of the cylinder chamber of the second double piston type hydraulic actuator and the pressure receiving area of the cramp chamber of the second double piston type hydraulic actuator.

4. A belt-type continuously variable transmission as claimed in Claim 2, in which the effective pressure receiving area of the cramp chambers of the first and second double piston type hydraulic actuators is set to about 40% of the effective pressure receiving area of the cylinder chambers of the first and second double piston type hydraulic actuators.

5. A belt-type continuously variable transmission as claimed in Claim 2, further comprising:

   a speed change control valve installed in the hydraulic circuit for regulating the hydraulic pressure led to the cylinder chamber of the first double piston type hydraulic actuator;
   a pressure reducing valve installed in the hydraulic circuit for regulating the hydraulic pressure led to the cylinder chamber of the second double piston type hydraulic actuator; and

a feedback mechanism that adjusts operation of the speed change control valve in accordance with the effective radius of the drive pulley.

6. A belt-type continuously variable transmission as claimed in Claim 5, in which the feedback mechanism comprises:

a step motor having an output element;

a groove-width indicating mechanism incorporated with the drive pulley; and

a link connected to a spool of the speed change control valve and having one end connected to the output element of the step motor and the other end connected to the groove-width indicating mechanism.

7. A belt-type continuously variable transmission as claimed in Claim 2, in which the second double piston type hydraulic actuator of the driven pulley further includes a centrifugal chamber that is defined between the cylinder and cramp chambers of the second double piston type hydraulic actuator, the centrifugal chamber operating against the cylinder and cramp chambers of the second double piston type actuator.

8. A belt-type continuously variable transmission comprising:

a drive pulley having a first double piston type hydraulic actuator which includes cylinder and cramp chambers that vary an effective radius of the drive pulley when applied with a hydraulic pressure;

a driven pulley having a second double piston type hydraulic actuator which includes cylinder and cramp chambers that vary an effective radius of the driven pulley when applied with a hydraulic pressure, the second double piston type hydraulic actuator further including a centrifugal chamber that works against the cramp and cylinder chambers of the second double piston type hydraulic actuator;

a belt operatively put around the drive and driven pulleys; and

a hydraulic circuit that applies the cylinder and cramp chambers of the first and second double piston type hydraulic actuators with the hydraulic pressure to vary the effective radii of the drive and driven pulleys, the hydraulic circuit including a line pressure passage that has a line pressure regulating valve installed herein for producing a line pressure in the line pressure passage, the line pressure being the highest in hydraulic pressures appearing in the hydraulic circuit,

wherein the cramp chamber of the first and second double piston type hydraulic actuators are substantially the same in a pressure receiving area and are connected to the line pressure passage to be fed with the line pressure regulated by the line pressure regulating valve, and

wherein the cylinder chambers of the first and second double piston type hydraulic actuators are substantially the same in a pressure receiving area.

# FIG.1

# FIG.2

# FIG.3

EP 1 531 291 A2

# FIG.4

```
        ┌─────────────┐
        │    START    │
        └──────┬──────┘
               ▼
    ┌──────────────────────┐
    │   CALCULATION OF      │──── S201
    │  TARGET DRIVE RATIO   │
    └──────────┬───────────┘
               ▼
    ┌──────────────────────┐
    │   CALCULATION OF      │──── S202
    │   REAL DRIVE RATIO    │
    └──────────┬───────────┘
               ▼
    ┌──────────────────────┐
    │ CALCULATION OF DRIVE  │──── S203
    │ AMOUNT OF STEP MOTOR  │
    └──────────┬───────────┘
               ▼
    ┌──────────────────────┐
    │     INCREASE OF       │──── S204
    │    LINE PRESSURE      │
    └──────────┬───────────┘
               ▼
    ┌──────────────────────┐
    │    OPERATION OF       │──── S205
    │     STEP MOTOR        │
    └──────────┬───────────┘
               ▼
   NO  ╱──────────────────╲──── S206
  ◄────│    HAS SPEED       │
       │ CHANGE FINISHED ?  │
        ╲──────────────────╱
               │ YES
               ▼
    ┌──────────────────────┐
    │ RETURNING LINE PRESSURE│──── S207
    │   TO NORMAL LEVEL     │
    └──────────┬───────────┘
               ▼
        ┌─────────────┐
        │     END     │
        └─────────────┘
```

14

EP 1 531 291 A2

# FIG.5

UP-SHIFT

# FIG.6

DOWN-SHIFT